# EUROPÄISCHE PATENTSCHRIFT

(11) **EP 2 606 715 B1**
(45) Veröffentlichungstag und Bekanntmachung des Hinweises auf die Patenterteilung: **22.04.2015**
(21) Anmeldenummer: 12008468.6
(22) Anmeldetag: 20.12.2012
(51) Int. Cl.: A01F 15/07

(54) **Press-Wickelkombination**
Baler-wrapper combination
Combinaison d'une presse et d'un dispositif d'enveloppement de balles

(30) Priorität: 22.12.2011 DE 102011122151
(43) Veröffentlichungstag der Anmeldung: 26.06.2013
(73) Patentinhaber: Maschinenfabrik Bernard Krone GmbH, 48480 Spelle (DE)
(72) Erfinder: Martensen, Klaus, 48477 Hörstel (DE); van Bassen, Alois, 49832 Freren (DE); Friemerding, Sven, 49832 Andervenne (DE); Lehmann, Marco, 48477 Hörstel (DE)

(56) Entgegenhaltungen:
- EP-A1- 1 266 562
- EP-A2- 1 393 614
- DE-A1- 10 257 252

## Beschreibung

Die Erfindung betrifft eine landwirtschaftliche Press-Wickelkombination, gemäß dem Oberbegriff des Anspruchs 1. Derartige Press-Wickelkombinationen bestehen aus einer üblicherweise an einem Zugfahrzeug, wie beispielweise einem Schlepper, angehängten Rundballenpresse zum Bilden von Rundballen aus insbesondere Grüngut, Heu, Stroh oder ähnlichem Erntegut und einer nachgeordneten Wickeleinrichtung zum Umhüllen der Rundballen mit Wickelmaterial, insbesondere Folie, wobei diese von zumindest einer Folienrolle durch Umlauf um den auf einem Wickeltisch liegenden Rundballen an diesen abgegeben wird und der umhüllte Rundballen darauffolgend auf dem Feld abgelegt wird. Die Ablage der vollständig umhüllten Rundballen erfolgt bevorzugt durch eine Kippbewegung des Wickeltisches, so dass die Rundballen durch die Schwerkraftwirkung auf den Erdboden rollen. Heutzutage ist es notwendig, die Rundballenpresse nach dem Pressen eines Rundballens anzuhalten, um den Rundballen mit Garn oder Netz abzubinden und mit Folie zu umhüllen, so dass der Rundballen anschließend möglichst schonend auf dem Erdboden abgelegt werden kann. Je nach Einsatzbedingungen kann es hierbei dennoch zu leichten Beschädigungen der Folie kommen, welche beispielsweise durch harte Stoppel oder spitze Gegenstände, wie Steine auf dem Erdboden, auf denen die Rundballen fallen, entstehen.

Um diese Beschädigungen an der Folie zu vermeiden, sind aus dem Stand der Technik, mehrere Lösungsvorschläge bekannt. Beispielsweise beschreibt die DE 297 11 213 U1 eine Vorrichtung zum kontinuierlichen und luftdichten Umhüllen von Körpern, insbesondere von Rundballen mit einem schwenkbar angebrachten Wickeltisch, dem eine Ablagevorrichtung zur Ablage der Rundballen auf dem Feld nachgeordnet ist, welche selbsttätig durch die Schwenkbewegung des Wickeltisches aus einer angehobenen Stellung in eine bodennah ausgerichtete Ablagestellung, in der der Rundballen auf den Erdboden rollen kann und zurück überführbar ist. Dadurch sollen die Beschädigungen der Folie bei der Ablage bzw. beim Abwurf der Rundballen vom Wickeltisch auf das Feld beispielsweise durch Stoppel oder Steine vermieden werden. Weiterhin offenbart die WO 92/00003 A1 eine Vorrichtung zum Umhüllen von Rundballen mit einem am Grundrahmen der Vorrichtung angebrachten Ableger für die umhüllten Rundballen, so dass die Rundballen möglichst schonend auf dem Feld abgelegt werden können.

Des Weiteren ist es bekannt, eine Gummimatte zu verwenden, welche am hinteren Ende des Wickeltisches einer Wickeleinrichtung angeordnet ist, über die die Rundballen auf den Erdboden rollen, so dass weitestgehend Beschädigungen an der Folie der Rundballen vermieden werden sollen. Die EP 1 266 562 A1 offenbart die Merkmale des Oberbegriffs des Patentanspruchs 1.

Eine sichere Ablage der Rundballen ohne Beschädigungen an der Folie mithilfe dieser zuvor beschriebenen Vorrichtungen ist jedoch lediglich gewährleistet, solange die Rundballen im Stand der Press-Wickelkombination abgelegt werden. Nach dem Stand der Entwicklungen werden jedoch zukünftig voraussichtlich kontinuierlich arbeitende Press-Wickelkombinationen vermehrt eingesetzt, wobei die Rundballen während der Erntefahrt abgelegt werden. Hierbei entsteht eine große Differenz zwischen der Geschwindigkeit eines abrollenden Rundballens von dem Wickeltisch bzw. von den zuvor beschriebenen Ablagevorrichtungen und der Fahrgeschwindigkeit der Press-Wickelkombination. Die Geschwindigkeitsdifferenzen verursachen bei der Ablage der Rundballen während der Fahrt erhöhte Reibungskräfte zwischen dem Erdboden und dem einzelnen Rundballen, wodurch die Folie der Rundballen sehr stark beschädigt werden kann. Ferner besteht die Gefahr, dass die Rundballen von den zuvor beschriebenen Ablagevorrichtungen der DE 297 11 213 U1 und der WO 92/00003 A1 zu schnell herunterrollen, so dass es unter anderem zu Problemen bei der Ausrichtung der Rundballen zur Fahrtrichtung und folglich auch zu Problemen bei der Einsammlung der Rundballen führen kann. Des Weiteren gewinnt die Anwendung von ISOBUS-fähigen Press-Wickelkombinationen und ISOBUS-fähigen Zugfahrzeugen zunehmend an Bedeutung, wobei beispielsweise die Fahrgeschwindigkeit automatisch an verschiedene Parameter der Press-Wickelkombination oder Einsatzbedingungen angepasst werden. Dadurch können unterschiedlichste Fahrgeschwindigkeiten der Press-Wickelkombination während der Ablage der Rundballen auftreten, was ebenfalls eine schonende, angepasste Ablage der Rundballen auf dem Feld während der Fahrt enorm erschwert.

Wird die Folie, welche insbesondere der Silierung des Ernteguts dient, derart beschädigt, dass Luft an das Erntegut gelangen kann, hat dieses enorme Auswirkungen insbesondere auf den Vergärungsprozess des Ernteguts, was bedeuten kann, dass die Rundballen mit beschädigter Folie im schlimmsten Fall verworfen werden müssen.

Deshalb liegt der Erfindung die Aufgabe zugrunde, eine verbesserte Press-Wickelkombination zum Pressen und Umhüllen von Rundballen, insbesondere aus Erntegut zu schaffen, bei der während der Fahrt der Press-Wickelkombination eine schonende Ablage der mit Wickelmaterial umhüllten Rundballen erreicht wird.

Erfindungsgemäß wird diese Aufgabe durch die kennzeichnenden Merkmale des Anspruchs 1 gelöst. Vorteilhafte Ausgestaltungen sind Gegenstand der weiteren Ansprüche.

Gemäß der Erfindung wird eine Press-Wickelkombination zum Pressen und Umhüllen von Rundballen, insbesondere aus Erntegut, mit einer Rundballenpresse und einer der Rundballenpresse nachgeordneten Wickeleinrichtung zum Umhüllen der Rundballen mit Wickelmaterial bereitgestellt, wobei eine Steuerung die zur Ablage der umhüllten Rundballen auf dem Feld ausgeführte Kippbewegung eines Wickeltisches der Wickeleinrichtung an die Fahrgeschwindigkeit der Press-Wickelkombination während der Ballenablage anpasst.

Bei der Ballenpresse der Press-Wickelkombination kann es sich um eine kontinuierlich arbeitende Presse oder auch um eine absätzig arbeitende Presse handeln, wobei der Rundballen von der Wickeleinrichtung während der Fahrt abgelegt wird. Des Weiteren kann die Press-Wickelkombination sowohl als eine an einem Zugfahrzeug angehängte Ballenpresse mit einer Wickeleinrichtung als auch ferner als eine selbstfahrende Press-Wickelkombination ausgebildet sein, wobei auf letztere Ausführung aufgrund der selteneren Verwendung von selbstfahrenden Pressen nicht näher eingegangen wird. Ebenso ist es nicht von Bedeutung, ob sich die Ballenpresse und die Wickeleinrichtung zusammen auf einem Rahmen befinden oder ob es sich um eine an die Ballenpresse angehängte Wickeleinrichtung handelt.

Die Ballenpresse ist in einer an sich bekannten Art aufgebaut. Der Wickeltisch der nachgeordneten Wickeleinrichtung wird vorzugsweise zur Ablage der Rundballen auf dem Feld aus einer waagerechten Normalstellung, in der die Rundballen umwickelt werden, in eine nach hinten abgesenkte Ablagestellung gekippt, so dass die Rundballen auf den Erdboden rollen. Die Betätigung dieser Kippbewegung erfolgt vorzugsweise über hydraulische Stellantriebe, wobei die Veränderung der Kippbewegung des Wickeltisches in der Geschwindigkeit unter anderem durch unterschiedliche Ansteuerung der Ventile erfolgen kann.

In einer besonders vorteilhaften Ausführung wird die erfindungsgemäße Anpassung der Kippbewegung des Wickeltisches an die Fahrgeschwindigkeit der Press-Wickelkombination während der Ballenablage von der Steuer- und Regeleinrichtung der Press-Wickelkombination automatisch ausgeführt. Als Grundlage dafür können der Steuerung durch zumindest eine Sensoreinrichtung ermittelte Fahrgeschwindigkeiten dienen. Dabei kann die Sensoreinrichtung zur Erfassung der Fahrgeschwindigkeit sowohl der Ballenpresse als auch dem Zugfahrzeug zugeordnet sein. Bei letzterer Variante steht die mit der Steuer- und Regeleinrichtung des Zugfahrzeugs verbundene Sensoreinrichtung vorzugsweise über eine ISOBUS-Leitung mit der Steuer- und Regeleinrichtung der Ballenpresse in Verbindung. Ebenso denkbar wäre eine manuelle, als Grundausführung vorgesehene Anpassung der Kippbewegung an die Fahrgeschwindigkeit.

Hierbei erfolgt die Steuerung basierend auf von des Bediener zuvor vorgegebene Werte.

Aus diversen Praxistests wurden Abhängigkeiten sowohl zwischen der Fahrgeschwindigkeit der Press-Wickelkombination bzw. zumindest eines Parameters des abzulegenden Rundballens und der Kippgeschwindigkeit des Wickeltisches als auch zwischen der Fahrgeschwindigkeit der Press-Wickelkombination bzw. dem zumindest einen Parameter des abzulegenden Rundballens und dem Kippwinkel des Wickeltisches ermittelt. Zu den Parametern des abzulegenden Rundballens können beispielsweise der Durchmesser und/oder das Gewicht der jeweiligen Rundballen zählen. Es kann vorgesehen sein, bei größeren oder schwereren Rundballen, den Wickeltisch schneller und/oder mit einem kleineren Kippwinkel in Bezug auf die Waagerechte und dementsprechend bei kleineren oder leichteren Rundballen, den Wickeltisch langsamer und/oder mit einem größeren Kippwinkel in Bezug auf die Waagerechte kippen zu lassen. Die Anpassung an den zumindest einen Parameter der Rundballen durch die Steuer- und Regeleinrichtung kann zusätzlich zu der geschwindigkeitsabhängigen Anpassung der Kippbewegung erfolgen.

Für die Anpassung der Kippbewegung an die Fahrgeschwindigkeit gilt im Wesentlichen folgende Faustformel: Je höher die Fahrgeschwindigkeit der Press-Wickelkombination, desto schneller wird auch der Wickeltisch zur Ablage der Rundballen gekippt und demzufolge je niedriger die Fahrgeschwindigkeit der Press-Wickelkombination ist, desto langsamer wird auch der Wickeltisch gekippt. Bei der Verstellung des Kippwinkels des Wickeltisches in Bezug auf die Waagerechte in Abhängigkeit der Fahrgeschwindigkeit ist es vorgesehen, bei einer höheren Fahrgeschwindigkeit einen größeren Kippwinkel und dementsprechend bei einer niedrigeren Fahrgeschwindigkeit einen kleineren Kippwinkel zu verwenden.

Dadurch, dass die Geschwindigkeit eines von dem Wickeltisch abrollenden Rundballens bei den zuvor beschriebenen Varianten zur Anpassung der Kippbewegung an die Fahrgeschwindigkeit der Press-Wickelkombination annähernd genauso groß ist wie die Fahrgeschwindigkeit, kann insbesondere erreicht werden, dass die Rundballen vorteilhaft nahezu ohne Einwirkung von Reibungskräften auf dem Erdboden abgelegt werden. Somit ist eine mit geringem konstruktivem Aufwand ausführbare Lösung zur schonenden Ablage der Rundballen auf dem Feld während der Fahrt einer Press-Wickelkombination geschaffen.

Weitere vorteilhafte Ausgestaltungen der Erfindung ergeben sich aus den Unteransprüchen und den Figuren der Zeichnung. Es zeigt:
- Fig. 1:: eine schematische Seitenansicht einer erfindungsgemäßen kontinuierlich arbeitenden Press-Wickelkombination;
- Fig. 2:: eine schematische Perspektivansicht des Wickeltisches der Ballenwickelvorrichtung der Press-Wickelkombination aus Fig. 1.

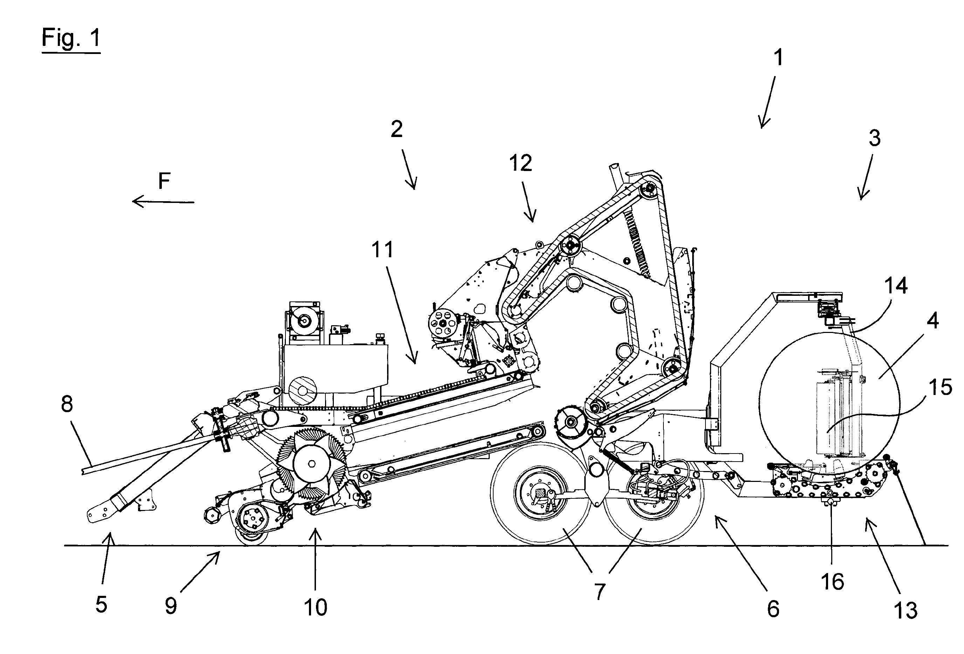

Die Fig. 1 zeigt eine schematisch dargestellte Seitenansicht einer erfindungsgemäßen kontinuierlich arbeitenden Press-Wickelkombination 1, welche eine Rundballenpresse 2 und eine nachgeordnete Wickeleinrichtung 3 zum Umhüllen der Rundballen 4 aufweist. Beide Einheiten ruhen auf einem gemeinsamen, über eine Zugdeichsel 5 mit einem in dieser Figur nicht dargestellten Zugfahrzeug, insbesondere landwirtschaftlichen Schlepper, verbindbaren Grundrahmen 6, welcher sich über Räder 7 zum Boden hin abstützt. Der Antrieb der gesamten Press-Wickelkombination 1 erfolgt über eine mit dem Zugfahrzeug koppelbaren Gelenkwelle 8. Die Rundballenpresse 2 der Press-Wickelkombination 1 umfasst im Wesentlichen eine Aufnahmeeinrichtung 9 zur Aufnahme von auf dem Boden zumeist in Schwaden liegenden Erntegut. An diese schließt sich in Gutflussrichtung entgegen der Fahrtrichtung F eine Förder- und Schneideinrichtung 10 an, die das Erntegut weiter zu einem Speicherraum 11 fördert, welcher das Erntegut entweder zwischenspeichert, oder durch den das Erntegut zu einer Presskammer 12, in der der Rundballen 4 gebildet und mit Netz umwickelt wird, weitergefördert wird. Für die Übergabe der fertig gepressten Rundballen 4 aus der Presskammer 12 zum Wickeltisch 13 der Wickeleinrichtung 3 ist die Rundballenpresse 2 mit einer verschwenkbaren Übergabeeinrichtung ausgestattet. Vom Wickeltisch 13 der Wickeleinrichtung 3 aufgenommen, wird der Rundballen 4 von diesem um seine Längsmittelachse in Drehung versetzt, wobei dann gleichzeitig von den an einem Wickelarm 14 angeordnete Folienrollen 15 durch Umkreisen des Rundballens 4 Folienbahnen auf diesen übertragen werden. Zur Ablage der mit Folie eingewickelten Rundballen 4 auf dem Feld ist der Wickeltisch 13 im Ausführungsbeispiel um eine quer zur Fahrtrichtung F zumindest annähernd horizontal ausgerichtete Achse 16 kippbar angeordnet.

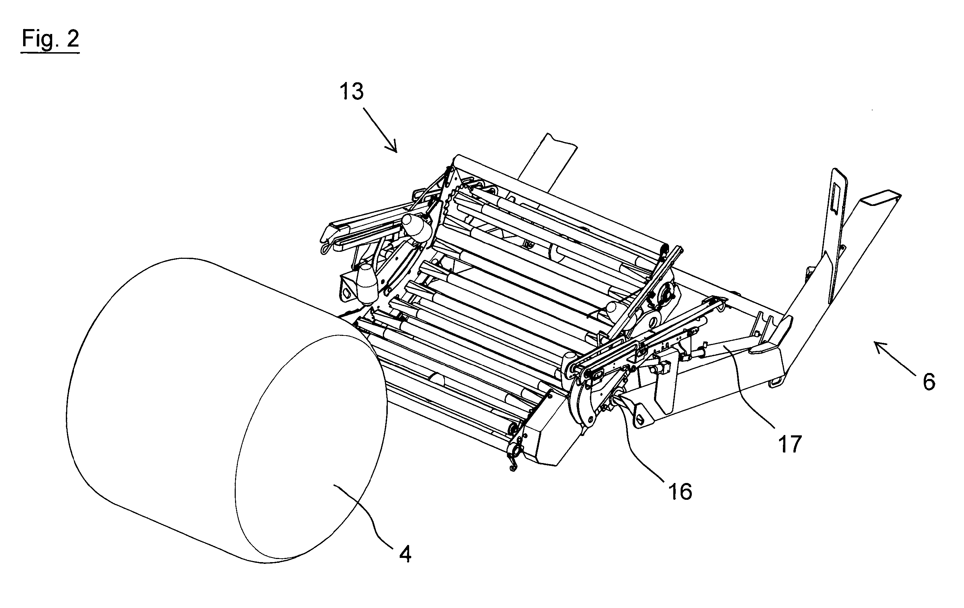

Die Fig. 2 zeigt einen vergrößerten, perspektivisch dargestellten Ausschnitt des an dem Grundrahmen 6 der Press-Wickelkombination kippbar angebrachten Wickeltisches 13 aus Fig. 1. Der Wickeltisch 13 ist in der Fig. 2 in einer nach hinten gekippten Stellung zur Ablage eines Rundballens 4 auf dem Feld dargestellt. Die Kippbewegung des Wickeltisches 13 wird in diesem Ausführungsbeispiel mittels Hydraulikzylinder 17 als Stellantrieb betätigt, wobei die Kippgeschwindigkeit und der Kippwinkel des Wickeltisches 13 veränderbar sind. Zur Vereinfachung wird in der nachfolgenden Beschreibung des Ausführungsbeispiels ausschließlich auf die Anpassung der Kippgeschwindigkeit des Wickeltisches 13 an die Fahrgeschwindigkeit der Press-Wickelkombination 1 und an einen Parameter des abzulegenden Rundballens 4 eingegangen.

Die Anpassung der Kippgeschwindigkeit des Wickeltisches 13 an die Fahrgeschwindigkeit der Press-Wickelkombination 1 und an einen Parameter des abzulegenden Rundballens 4 erfolgt in diesem Ausführungsbeispiel automatisch durch die über eine ISOBUS-Leitung mit einer Steuer- und Regeleinrichtung des Zugfahrzeugs verbundene Steuer- und Regeleinrichtung der Press-Wickelkombination 1. Zur Erfassung der Fahrgeschwindigkeit der Press-Wickelkombination 1 ist dem Zugfahrzeug eine mit der Steuer- und Regeleinrichtung des Zugfahrzeugs verbundene Sensoreinrichtung zugeordnet.

In diesem Ausführungsbeispiel stellt der Parameter den Durchmesser der Rundballen 4 dar. Eine Anpassung der Kippbewegung des Wickeltisches 13 an das Gewicht der Rundballen 4 wäre hierbei ebenfalls denkbar. Diese kann sowohl in Kombination mit der Anpassung an den Durchmesser der Rundballen 4 als auch unabhängig davon erfolgen. Für die Anpassung an den Durchmesser der Rundballen 4 werden in diesem Ausführungsbeispiel zuvor von dem Bediener Werte über den Durchmesser vorgegeben.

Wird eine niedrige Fahrgeschwindigkeit der Press-Wickelkombination 1 erfasst oder ein kleiner Durchmesser der Rundballen 4 vorgegeben, ist es vorgesehen, den Wickeltisch 13 der Wickeleinrichtung 3 zur Ablage der Rundballen 4 langsam kippen zu lassen. Bei einer höheren Fahrgeschwindigkeit der Press-Wickelkombination 1 oder bei einem großen Durchmesser der Rundballen 4, ist es vorgesehen, den Wickeltisch 13 der Wickeleinrichtung 3 zur Ablage der Rundballen 4 schnell kippen zu lassen. Dadurch wird unter anderem erreicht, dass die Geschwindigkeit der Rundballen 4 relativ zum Erdboden annähernd 0 beträgt, so dass möglichst geringe Reibungskräfte entstehen und die Rundballen 4 schonend, ohne Folienbeschädigungen auf dem Feld abgelegt werden.

## Patentansprüche

1. Press-Wickelkombination (1) zum Pressen und Umhüllen von Rundballen (4) insbesondere aus Erntegut, welche eine Rundballenpresse (2) zum Bilden von Rundballen (4) und eine der Rundballenpresse (2) nachgeordnete, einen Wickeltisch (13) aufweisende Ballenwickelvorrichtung (3) zum Umhüllen der Rundballen (4) mit Wickelmaterial umfasst, wobei eine Steuer- und Regeleinrichtung der Press-Wickelkombination (1) zur Aufnahme der gepressten Rundballen (4) für den Wickelvorgang und zur Ablage der umhüllten Rundballen (4) auf dem Erdboden eine Kippbewegung des Wickeltisches (13) bewirkt, **dadurch gekennzeichnet, dass** die Steuer- und Regeleinrichtung der Press-Wickelkombination (1) die Kippbewegung des Wickeltisches (13) zur Ablage der Rundballen (4) an die Fahrgeschwindigkeit der Press-Wickelkombination (1) während der Ballenablage anpasst.

2. Press-Wickelkombination (1) nach Anspruch 1, **dadurch gekennzeichnet, dass** die Steuer- und Regeleinrichtung der Press-Wickelkombination (1) eine Anpassung der Kippbewegung des Wickeltisches (13) an durch den Bediener vorgegebene Fahrgeschwindigkeiten der Press-Wickelkombination (1) während der Ballenablage bewirkt.

3. Press-Wickelkombination (1) nach Anspruch 1, **dadurch gekennzeichnet, dass** die Steuer- und Regeleinrichtung der Press-Wickelkombination (1) eine automatische Anpassung der Kippbewegung des Wickeltisches (13) an durch Sensoreinrichtungen erfasste Fahrgeschwindigkeiten der Press-Wickelkombination (1) während der Ballenablage bewirkt.

4. Press-Wickelkombination (1) nach zumindest einem der vorhergehenden Ansprüche, **dadurch gekennzeichnet, dass** die Steuer- und Regeleinrichtung eine Anpassung der Kippgeschwindigkeit des Wickeltisches (13) zur Ablage der Rundballen (4) an die Fahrgeschwindigkeit der Press-Wickelkombination (1) während der Ballenablage bewirkt.

5. Press-Wickelkombination (1) nach zumindest einem der vorhergehenden Ansprüche, **dadurch gekennzeichnet, dass** die Steuer- und Regeleinrichtung eine Anpassung des Kippwinkels des Wickeltisches (13) in Bezug auf die Waagerechte bei der Ablage der Rundballen (4) an die Fahrgeschwindigkeit der Press-Wickelkombination (1) während der Ballenablage bewirkt.

6. Press-Wickelkombination (1) nach zumindest einem der vorhergehenden Ansprüche, **dadurch gekennzeichnet, dass** die Steuer- und Regeleinrichtung die Kippbewegung des Wickeltisches (13) derart an die Fahrgeschwindigkeit der Press-Wickelkombination (1) während der Ballenablage anpasst, dass zwischen der Rundballenoberfläche und dem Erdboden möglichst keine horizontale Relativbewegung besteht.

7. Press-Wickelkombination (1) nach zumindest einem der vorhergehenden Ansprüche, **dadurch gekennzeichnet, dass** die Rundballenpresse (2) der Press-Wickelkombination (1) als eine kontinuierlich arbeitende Presse ausgebildet ist.

## Claims

1. Press/wrapper combination (1) for pressing and wrapping round bales (4), in particular round bales of agricultural crops, comprising a round baler (2) for producing round bales (4) and a bale wrapping device (3), which is arranged downstream of the round baler (2) and comprises a wrapping table (13), for wrapping the round bales (4) with wrapping material, an open- and closed-loop control apparatus of the press/wrapper combination (1) producing a tilting movement of the wrapping table (13) for receiving the pressed round bales (4) for the wrapping process and for depositing the wrapped round bales (4) on the ground, **characterised in that**, while the bales are being deposited, the open- and closed-loop control apparatus of the press/wrapper combination (1) adapts the tilting movement of the wrapping table (13) to the travelling speed of the press/wrapper combination (1) in order to deposit the round bales (4).

2. Press/wrapper combination (1) according to claim 1, **characterised in that**, while the bales are being deposited, the open- and closed-loop control apparatus of the press/wrapper combination (1) adapts the tilting movement of the wrapping table (13) to travelling speeds of the press/wrapper combination (1) that are predetermined by the operator.

3. Press/wrapper combination (1) according to claim 1, **characterised in that**, while the bales are being deposited, the open- and closed-loop control apparatus of the press/wrapper combination (1) automatically adapts the tilting movement of the wrapping table (13) to travelling speeds of the press/wrapper combination (1) that are detected by means of sensor apparatuses.

4. Press/wrapper combination (1) according to at least one of the preceding claims, **characterised in that**, while the bales are being deposited, the open- and closed-loop control apparatus adapts the tilting speed of the wrapping table (13) to the travelling speed of the press/wrapper combination (1) in order to deposit the round bales (4).

5. Press/wrapper combination (1) according to at least one of the preceding claims, **characterised in that**, while the bales are being deposited, the open- and closed-loop control apparatus adapts the tilting angle of the wrapping table (13), relative to the horizontal, to the travelling speed of the press/wrapper combination (1) when the round bales (4) are deposited.

6. Press/wrapper combination (1) according to at least one of the preceding claims, **characterised in that**, while the bales are being deposited, the open- and closed-loop control apparatus adapts the tilting movement of the wrapping table (13) to the travelling speed of the press/wrapper combination (1) in such a way that horizontal relative movement between the surface of the round bale and the ground preferably does not occur.

7. Press/wrapper combination (1) according to at least one of the preceding claims, **characterised in that** the round baler (2) of the press/wrapper combination (1) is formed as a continuously operating press.

## Revendications

1. Combiné presse-enrubanneuse (1) pour presser et envelopper des ballots ronds (4) en particulier de produits de récolte qui comporte une presse de ballots ronds (2) pour permettre de former des ballots ronds (4) et un dispositif d'enrubannage de ballots (3) comportant une table d'enrubannage (13) montée en aval de la presse de ballots ronds et permettant d'envelopper des ballots ronds (4) avec un matériau d'enrubannage, un dispositif de commande et de régulation du combiné presse-enrubanneuse (1) provoquant un mouvement de basculement de la table d'enrubannage (13) pour permettre de recueillir les ballots ronds pressés (4) pour effectuer le processus d'enrubannage et de déposer les ballots ronds (4) enrubannés sur la surface du sol,
**caractérisé en ce que**
le dispositif de commande et de régulation du combiné presse-enrubanneuse (1) adapte le mouvement de basculement de la table d'enrubannage (13) pour déposer les ballots ronds (4) à la vitesse de déplacement du combiné presse-enrubanneuse (1) pendant le dépôt des ballots.

2. Combiné presse-enrubanneuse (1) conforme à la revendication 1,
**caractérisé en ce que**
le dispositif de commande et de régulation du combiné presse-enrubanneuse (1) provoque une adaptation du mouvement de basculement de la table d'enrubannage (13) aux vitesses de déplacement du combiné presse-enrubanneuse (1) pendant le dépôt des ballots prédéfini par l'utilisateur.

3. Combiné presse-enrubanneuse (1) conforme à la revendication 1,
**caractérisé en ce que**
le dispositif de commande et de régulation du combiné presse-enrubanneuse (1) provoque une adaptation automatique du mouvement de basculement de la table d'enrubannage (13) aux vitesses de déplacement du combiné presse-enrubanneuse (1) pendant le dépôt des ballots détectés par des dispositifs de capteurs.

4. Combiné presse-enrubanneuse (1) conforme à au moins l'une des revendications précédentes,
**caractérisé en ce que**
le dispositif de commande et de régulation provoque une adaptation de la vitesse de basculement de la table d'enrubannage (13) pour le dépôt des ballots ronds (4) à la vitesse de déplacement du combiné presse-enrubanneuse (1) pendant le dépôt des ballots.

5. Combiné presse-enrubanneuse (1) conforme à au moins l'une des revendications précédentes,
**caractérisé en ce que**
le dispositif de commande et de régulation provoque une adaptation de l'angle de basculement de la table d'enrubannage (13) par rapport à l'horizontale lors du dépôt des ballots ronds (4) à la vitesse de déplacement du combiné presse enrubanneuse (1) pendant le dépôt des ballots.

6. Combiné presse-enrubanneuse (1) conforme à au moins l'une des revendications précédentes,
**caractérisé en ce que**
le dispositif de commande et de régulation adapte le mouvement de basculement de la table d'enrubannage (13) à la vitesse de déplacement du combiné presse-enrubanneuse (1) pendant le dépôt des ballots de sorte qu'il n'y ait dans la mesure du possible pas de mouvement relatif horizontal entre la surface des ballots ronds et la surface du sol.

7. Combiné presse-enrubanneuse (1) conforme à au moins l'une des revendications précédentes,
**caractérisé en ce que**
la presse à ballots ronds (2) du combiné presse-enrubanneuse (1) est réalisée sous la forme d'une presse travaillant en continu.
